# EUROPEAN PATENT APPLICATION

(11) **EP 4 191 442 A1**
(43) Date of publication of application: **07.06.2023**
(21) Application number: 22814829.2
(22) Date of filing: 29.03.2022
(51) Int. Cl.: G06F 16/951

(54) **CLOUD COMPUTING INDEX RECOMMENDATION METHOD AND SYSTEM**

(30) Priority: 04.06.2021 CN 202110624453
(71) Applicant: KUYUN (SHANGHAI) INFORMATION TECHNOLOGY CO., LTD., Shanghai 200120 (CN)
(72) Inventor: SUN, Biaobiao, Shanghai 200120 (CN); LI, Yang, Shanghai 200120 (CN); HAN, Qing, Shanghai 200120 (CN)
(74) Representative: Ipey
(86) International application number: PCT/CN2022/083619
(87) International publication number: WO 2022/252782

(57) **Abstract**

The present invention provides a method and a system for recommending indexes by cloud computation. The method comprises the following steps: acquiring the unit computation cost and the unit storage cost of a currently used cloud computation server in unit time; acquiring all historical query statements of a target user, extracting common characteristics of all the historical query statements, and determining query indexes corresponding to the historical query statements according to the common characteristics; determining the query cost of each query index according to the frequency and time of querying a database through the query index and the used computation resources; determining a plurality of current query indexes corresponding to the current query statement based on the acquired current query statement of the target user; determining the total cost corresponding to each current query index according to the plurality of current query indexes through the unit computation cost, the unit storage cost, and the computation resource usage amount and usage time; and recommending a target query index to the target user. According to the method of the present invention, computation resources are exchanged through storage resources by recommending indexes.

## Description

### Technical Field

The present invention relates to the technical field of cloud computation, and particularly relates to a method and a system for recommending indexes by cloud computation.

### Background Art

In recent years, cloud computation industry is developed quickly, more and more enterprises begin to enter cloud environment on a large scale, both OLTP (On-Line Transaction Processing) application and OLAP (On-Line Analysis Processing) application are gradually migrated to the cloud, and mainstream cloud manufacturers provide reliable elastic scaling computation services and storage services to meet the requirements of clients.

One trend of the current big data architecture is the separation of computation and storage. Under the big background of the cloud environment, the computation service is deployed on the elastic cloud server provided by the cloud manufacturer, and the storage service can select the cheap and infinitely scalable block storage provided by the cloud manufacturer.

By observing the product pricing of multiple mainstream cloud computation service providers, it can be seen that the cost of block storage is much lower than the computation cost. In the current OLAP analysis field, many software utilizes the system of MPP architecture. The core idea of MPP (Massive Parallel Processing) is to distribute the tasks in parallel to multiple servers and nodes. After the computation is completed on each node, the results of each node are summarized to obtain the final analysis result. However, in the current cloud environment, when processing the super-large-scale data set, each query will consume a lot of computation resources, and even if the query analysis demand is repeated, high analysis cost will be generated.

### Summary of the Present Invention

An embodiment of the present invention provides a method and a system for recommending indexes by cloud computation, which can exchange the computation cost into storage cost so as to reduce the total cost of ownership of cloud use.

In one aspect, the embodiment of the present invention provides a method for recommending indexes by cloud computation. The method comprises the following steps: acquiring the unit computation cost and the unit storage cost of a currently used cloud computation server in unit time;
Acquiring all historical query statements of a target user, extracting common characteristics of all the historical query statements, and determining query indexes corresponding to the historical query statements according to the common characteristics;
Determining the query cost of each query index according to the frequency and time of querying a database through the query index and the used computation resources;
Determining a plurality of current query indexes corresponding to the current query statement based on the acquired current query statement of the target user;
Determining the total cost corresponding to each current query index according to the plurality of current query indexes through the unit computation cost, the unit storage cost, and the computation resource usage amount and usage time; and
Recommending a target query index to the target user, wherein the target query index comprises the query index with the lowest cost in the total cost corresponding to each current query index.

In an optional embodiment, the method of determining the query cost of each query index according to the frequency and time of querying the database through the query index and the used computation resources comprises:
Determining the query cost of each query index according to the frequency of querying the database through the query index, the time of querying the database through the query index, the computation resources used by querying through the query index and the data sampling statistical information of pre-acquired source data;
Determining the cost benefit of the query index based on the pre-acquired query index computation cost, and adding a cost benefit label for the query index.

In an optional embodiment, the method of determining the computation resource usage amount and usage time corresponding to each current query index comprises:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

In an optional embodiment, after recommending the target query index to the target user, the method further comprises:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database.

In an optional embodiment, before acquiring all historical query statements of the target user, extracting common characteristics of all the historical query statements, and determining query indexes corresponding to the historical query statements according to the common characteristics, the method further comprises:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.

In a second aspect, the embodiment of the present invention provides a system for recommending indexes by cloud computation. The system comprises:
A cloud computation and storage cost collection module used for acquiring the unit computation cost and the unit storage cost of the currently used cloud computation server in unit time;
A query history analysis and prediction module used for acquiring all historical query statements of the target user, extracting common characteristics of all the historical query statements, and determining query indexes corresponding to the historical query statements according to the common characteristics;
A construction and storage cost analysis and prediction module used for determining the query cost of each query index according to the frequency and time of querying a database through the query index and the used computation resources, and determining the plurality of current query indexes corresponding to the current query statement based on the acquired current query statement of the target user; and
Determining the total cost corresponding to each current query index according to the plurality of current query indexes through the unit computation cost, the unit storage cost, and the computation resource usage amount and usage time; and
An intelligent center judgment module used for recommending the target query index to the target user, wherein the target query index comprises the query index with the lowest cost in the total cost corresponding to each current query index.

In an optional embodiment, the construction and storage cost analysis and prediction module is further used for:
Determining the query cost of each query index according to the frequency of querying the database through the query index, the time of querying the database through the query index, the computation resources used by querying through the query index and the data sampling statistical information of pre-acquired source data; and
Determining the cost benefit of the query index based on the pre-acquired query index computation cost, and adding a cost benefit label for the query index.

In an optional embodiment, the construction and storage cost analysis and prediction module is further used for:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

In an optional embodiment, the system further comprises a cost computation module which is used for:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database.

In an optional embodiment, the system further comprises a model matching module which is used for:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.
The embodiment of the present invention provides a method for recommending indexes by cloud computation. The method comprises: acquiring the unit computation cost and the unit storage cost of the currently used cloud computation server in unit time;
Acquiring all historical query statements of a target user, extracting common characteristics of all the historical query statements, and determining query indexes corresponding to the historical query statements according to the common characteristics;
Determining the query cost of each query index according to the frequency and time of querying a database through the query index and the used computation resources;
Determining a plurality of current query indexes corresponding to the current query statement based on the acquired current query statement of the target user;
Determining the total cost corresponding to each current query index according to the plurality of current query indexes through the unit computation cost, the unit storage cost, and the computation resource usage amount and usage time; and
Recommending a target query index to the target user, wherein the target query index comprises the query index with the lowest cost in the total cost corresponding to each current query index.

According to the embodiment of the present invention, intelligent recommendation indexes are provided for reducing the query computation cost; in case of more use of intelligently recommended indexes for pre-computation, the computation cost can be exchanged into the storage cost, thereby reducing the total cost of ownership used in cloud. Especially in a high concurrency scene, the more queries are, the more pre-computation results can be reused, and the more computation resources consumed by each query can be reduced.

### Brief Description of the Drawings

FIG. 1 is a flow schematic diagram of a method for recommending indexes by cloud computation in an embodiment of the present invention;
FIG. 2 is a logic schematic diagram of a system for recommending indexes by cloud computation in an embodiment of the present invention; and
FIG. 3 is a structural schematic diagram of a system for recommending indexes by cloud computation in an embodiment of the present invention.

### Detailed Description of the Present Invention

In order to make the purposes, technical solutions and advantages of the embodiments of the present invention more clear, the technical solutions in the embodiments of the present invention will be clearly and completely described below with reference to the accompanying drawings in the embodiments of the present invention. Obviously, the described embodiments are only some of the embodiments of the present disclosure, but not all of the embodiments. Based on the embodiments in the present invention, all other embodiments obtained by persons of ordinary skill in the art without creative efforts shall fall within the protection scope of the present invention.

The terms "first", "second", "third", "fourth", etc. (if any) in the specification and claims of the present invention and the above-mentioned drawings are used for distinguishing similar objects and are not necessarily used for describing a specific order or sequence. It should be understood that the data so used may be interchanged under appropriate circumstances such that the embodiments of the prevent invention described herein can be practiced in sequences other than those illustrated or described herein.

It should be understood that, in various embodiments of the present disclosure, the size of the sequence number of each process does not imply the order of execution, and the execution sequence of each process should be determined by its functions and internal logic, and should not constitute any limitation to the implementation process of the embodiments of the present invention.

In addition, the terms "comprising" and "having", and any variations thereof, are intended to cover non-exclusive inclusion, for example, a process, method, system, product or device comprising a series of steps or units is not necessarily limited to those steps or units expressly listed, but may include steps or units not expressly listed or inherent to the process, method, product or device other steps or units.

It should be understood that, in this prevent invention, "plurality" refers to two or more. "And/or" is just an association relationship that describes the associated objects, which means that there can be three kinds of relationships, for example, and/or B, it can mean that A exists alone, A and B exist at the same time, and B exists alone. The character "/" generally indicates that the associated objects are in an "or" relationship. "Comprising A, B and C", "Comprising A, B, C" means comprising A, B, and C, "Comprising A, B or C" means comprising one of A, B, and C, "Comprising A, B and/or C" means comprising any one or any two or three of A, B, and C.

It should be understood that, in the present invention, "B corresponding to A", "B corresponding to A", "A corresponding to B" or "B corresponding to A" means that B is associated with A, B can be determined according to A. Determining B according to A does not mean that B is can only be determined according to B, B is also can be determined according to A and/or other information. The matching between A and B means that the similarity between A and B is greater than or equal to the preset threshold.

Depending on the context, "if' as used herein may be interpreted as "during" or "when" or "in response to determining" or "in response to detecting".

The technical solutions of the present invention will be described in detail below with specific embodiments. The following specific embodiments can be combined with each other, and the same or similar concepts or processes may not be repeated in some embodiments.

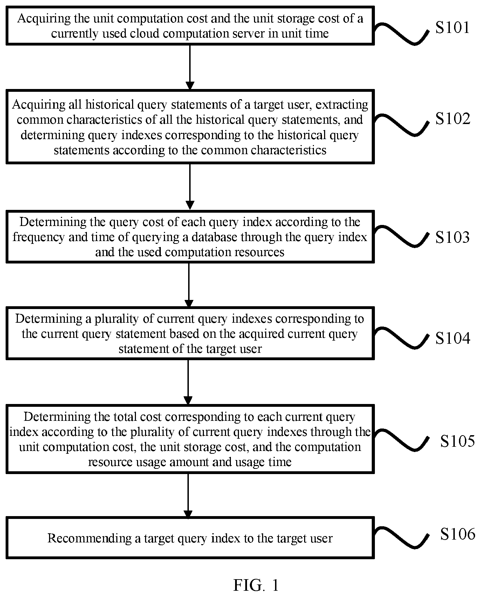

FIG. 1 exemplarily describes the flow schematic diagram of the method for recommending the indexes by cloud computation provided by the embodiment of the present invention. As shown in FIG. 1, the method comprises the following steps:
S101, acquiring the unit computation cost and the unit storage cost of the currently used cloud computation server in unit time;
The method for recommending the indexes by cloud computation provided by the embodiment of the present invention is a solution for intelligently recommending the indexes based on cloud cost in the OLAP field. Based on the solution provided by the embodiment of the present invention, the query history will be analyzed according to the client on the premise of meeting query performance and construction performance of a client, and all-round multi-turn intelligent feedback tuning will be carried out,
Finally, a part of indexes is intelligently recommended; and by adding this part of indexes, although the construction computation cost and the storage cost are increased, the query computation cost is greatly reduced, and therefore the total cost is greatly reduced.

In the embodiment of the present invention, OLTP (On-Line Transaction Processing) application is characterized in that:
1. The real-time requirement is high.
2. The data volume is not very large, the data volume in a production library is not too large generally, and corresponding data processing and transfer can be performed in time.
3. The transaction is generally determined, for example, the amount of money for of depositing and withdrawing of a bank is certainly determined, so the OLTP accesses the determined data. And
4. The concurrency is high, and the ACID principle is required to be met, for example, two persons operate one bankcard account at the same time, such as ten thousands of QPS requests during flash sale activities of a large shopping website.

OLAP (On-Line Analysis Processing) application is characterized in that
1. The real-time requirement is not very high, for example, the most common application is to update data in a daily level and then output a corresponding data report.
2. The data volume is large, and as the OLAP supports dynamic query, the user may obtain information which the user wants to know by counting a lot of data, such as time sequence analysis, so the processed data volume is very large. And
3. The key point of the OLAP system is to provide decision support through data, so that the query is generally dynamic and self-defined. Therefore, in the OLAP, the concept of dimensionality is very important. Generally, all dimension data concerned by the user are stored in a corresponding data platform.

By acquiring the unit computation cost and the unit storage cost of a currently used cloud computation server in unit time, multiple mainstream cloud computation manufacturers are adapted, and accurate unit computation and storage cost information can be collected to support a subsequent cost computation process.

S102, acquiring all historical query statements of the target user, extracting common characteristics of all the historical query statements, and determining query indexes corresponding to the historical query statements according to the common characteristics;
By extracting the common characteristics of all the historical query statements, the query indexes can be further determined according to the common characteristics, wherein the query indexes can be repeatedly used, so that the subsequent query cost is reduced.

In an optional embodiment, before acquiring all historical query statements of the target user, extracting common characteristics of all the historical query statements, and determining query indexes corresponding to the historical query statements according to the common characteristics, the method further comprises:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.
Collecting all historical analysis query statements of the client and extracting common characteristics from all query plan trees so as to recommend a model for answering these queries.
S 103, determining the query cost of each query index according to the frequency and time of querying a database through the query index and the used computation resources;

In an optional embodiment, the method of determining the query cost of each query index according to the frequency and time of querying the database through the query index and the used computation resources comprises:
Determining the query cost of each query index according to the frequency of querying the database through the query index, the time of querying the database through the query index, the computation resources used by querying through the query index and the data sampling statistical information of pre-acquired source data; and
Determining the cost benefit of the query index based on the pre-acquired query index computation cost, and adding a cost benefit label for the query index.

Because the analysis query of the client is complex and diverse, a large number of indexes with inclusion relationships will be recommended, and the query history analysis and prediction module speculates the usage amount of computation resources which can be reduced by each queried SQL after obtaining a certain index according to the SQL querying frequency in the history query, the time consumption of querying SQL, the situation of the used computation resources and the data sampling statistical information of the source data, so that the computation cost is saved, and the label of query cost benefit is marked for each index.
S 104, determining a plurality of current query indexes corresponding to the current query statement based on the acquired current query statement of the target user;
S015, determining the total cost corresponding to each current query index according to the plurality of current query indexes through the unit computation cost, the unit storage cost, and the computation resource usage amount and usage time.

In an optional embodiment, the method of determining the computation resource usage amount and usage time corresponding to each current query index comprises:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

According to multiple candidate indexes, the construction computation cost and the storage cost required for constructing each index can be speculated according to the data sampling statistics information of the source data. When speculating the construction computation cost, the inclination rate and repetition rate in each dimension can be identified according to the data sampling statistical information of the source data, thus the cpu and internal memory resources and construction duration required for computation each index can be intelligently predicted, and as a result, the usage amount and usage duration of the computation resources can be speculated.

When speculating the storage cost, the volume of storage for constructing the index will be speculated according to the data characteristics, and then the total cost of each index will be computed according to the unit computation cost and the unit storage cost provided by the cloud computation and storage cost collection module, and then all the candidate indexes are labeled with the construction cost expenditure.

S 106, recommending a target query index to the target user.

The target query index comprises a query index with the lowest cost in total cost corresponding to each current query index.

In an optional embodiment, after recommending the target query index to the target user, the method further comprises:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database.

All construction cost expenditure conditions according can be analyzed according to all candidate indexes and query cost benefit conditions. Then the indexes are selected according to the total cost benefit so as to provide an index recommendation solution with the lowest total cost.

The embodiment of the present invention provides a method for recommending indexes by cloud computation. The method comprises the following steps:
Acquiring the unit computation cost and the unit storage cost of a currently used cloud computation server in unit time.
Acquiring all historical query statements of a target user, extracting common characteristics of all the historical query statements, and determining query indexes corresponding to the historical query statements according to the common characteristics;
Determining the query cost of each query index according to the frequency and time of querying a database through the query index and the used computation resources;
Determining a plurality of current query indexes corresponding to the current query statement based on the acquired current query statement of the target user;
Determining the total cost corresponding to each current query index according to the plurality of current query indexes through the unit computation cost, the unit storage cost, and the computation resource usage amount and usage time; and
Recommending a target query index to the target user, wherein the target query index comprises the query index with the lowest cost in the total cost corresponding to each current query index.

According to the embodiment of the present invention, intelligent recommendation indexes are provided for reducing the query computation cost; in case of more use of intelligently recommended indexes for pre-computation, the computation cost can be exchanged into the storage cost, thereby reducing the total cost of ownership used in cloud. Especially in a high concurrency scene, the more queries are, the more pre-computation results can be reused, and the more computation resources consumed by each query can be reduced.

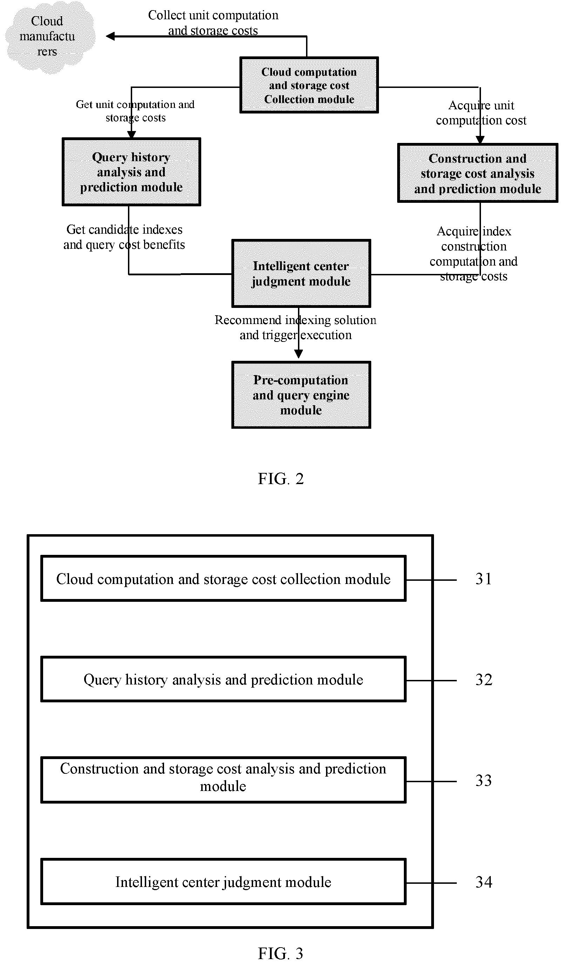

FIG. 2 is the logic schematic diagram of the system for recommending indexes by cloud computation in the embodiment of the present invention; as shown in the FIG. 2, the running logic of the system comprises:
A cloud computation and storage cost collection module which is capable of automatically collecting the computation host type of the currently used cloud service provider, the use cost of a computation server in unit time and the storage cost of unit storage data volume in unit time, wherein the module is adapted to multiple mainstream manufacturers and is used for collecting accurate unit computation and storage cost information to support the cost computation process of a query history analysis and prediction module and a construction and storage cost analysis and prediction module.

The query history analysis and prediction module which is capable of collecting all history analysis and query statements of the client, and extracting common characteristics from all query plan trees, thereby recommending models capable of answering these queries, wherein because the analysis query of the client is complex and diverse, a large number of indexes with inclusion relationships will be recommended, and the query history analysis and prediction module speculates the usage amount of computation resources which can be reduced by each queried SQL after obtaining a certain index according to the SQL querying frequency in the history query, the time consumption of querying SQL, the situation of the used computation resources and the data sampling statistical information of the source data, so that the computation cost is saved, and the label of query cost benefit is marked for each index..

The construction and storage cost analysis and prediction module which is capable of receiving the constructed index candidates transmitted by an intelligent center judgment module, and speculating the construction computation cost and the storage cost required for constructing each index according to the data sampling statistics information of the source data. When speculating the construction computation cost, the module is capable of identifying the inclination rate and repetition rate in each dimension according to the data sampling statistical information of the source data, then intelligently predicting the cpu and internal memory resources and construction duration required for computation each index, and finally speculating the usage amount and usage duration of the computation resources; and when speculating the storage cost, the module is capable of speculating the volume of storage for constructing the index according to the data characteristics, and then computation the total cost of each index according to the unit computation cost and the unit storage cost provided by the cloud computation and storage cost collection module, and finally labelling all the candidate indexes with the construction cost expenditure.

An intelligent center judgment module which is capable of informing the query history analysis and prediction module of providing all candidate indexes and query cost earning conditions of the candidate indexes, and submitting to the construction and storage cost analysis and prediction module to analyze all construction cost expenditure conditions. Then the indexes are selected according to the total cost benefit so as to provide an index recommendation solution with the lowest total cost.

A pre-computation and query engine module which is capable of constructing a pre-computation index according to the index recommended by the intelligent center judgment module, wherein a pre-computation module will pull an original super-large-scale data set for pre-aggregation and provide the constructed index for a query module, so that the execution efficiency of analyzing SQL by the client is improved, the scanning data volume is reduced, and the query computation cost is further reduced.

FIG. 3 exemplarily describes the structural schematic diagram of the system for recommending indexes by cloud computation in the embodiment of the present invention. As shown in FIG. 3, the system comprises:
A cloud computation and storage cost collection module 31 used for acquiring the unit computation cost and the unit storage cost of the currently used cloud computation server in unit time;
A query history analysis and prediction module 32 used for acquiring all historical query statements of the target user, extracting common characteristics of all the historical query statements, and determining query indexes corresponding to the historical query statements according to the common characteristics;
A construction and storage cost analysis and prediction module 33 used for determining the query cost of each query index according to the frequency and time of querying a database through the query index and the used computation resources, and determining a plurality of current query indexes corresponding to the current query statement based on the acquired current query statement of the target user; and
Determining the total cost corresponding to each current query index according to the plurality of current query indexes through the unit computation cost, the unit storage cost, and the computation resource usage amount and usage time; and
An intelligent center judgment module 34 used for recommending a target query index to the target user, wherein the target query index comprises the query index with the lowest cost in the total cost corresponding to each current query index.

In an optional embodiment, the construction and storage cost analysis and prediction module 33 is further used for:
Determining the query cost of each query index according to the frequency of querying the database through the query index, the time of querying the database through the query index, the computation resources used by querying through the query index and the data sampling statistical information of pre-acquired source data; and
Determining the cost benefit of the query index based on the pre-acquired query index computation cost, and adding a cost benefit label for the query index.

In an optional embodiment, the construction and storage cost analysis and prediction module 33 is further used for:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

In an optional embodiment, the system further comprises a cost computation module which is used for:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database.

In an optional embodiment, the system further comprises a model matching module which is used for:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.

The present invention further provides a program product. The program product comprises an execution instruction which is stored in the readable storage medium. At least one processor of the equipment can read the execution instruction from the readable storage medium, and the at least one processor executes the execution instruction to enable the equipment to implement the methods provided by the abovementioned various embodiments.

The readable storage medium can be a computer storage medium or a communication medium. The communication medium comprises any medium convenient for transmitting the computer program from one place to another place. The storage medium can be any available medium which can be accessed by a general purpose or special purpose computer. For example, the readable storage medium is coupled to the processor, so that the processor can read information from the readable storage medium and write the information into the readable storage medium. Certainly, the readable storage medium can also be a component of the processor. Processors and the readable storage medium can be positioned in an Application Specific Integrated Circuits (ASIC). In addition, the ASIC can be located in user equipment. Of course, the processors and the readable storage medium can also serve as discrete components in communication equipment. The readable storage medium can be a read-only memory (ROM), a random access memory (RAM), a CD-ROM, a magnetic tape, a floppy disk, optical data storage equipment and the like.

In the abovementioned embodiments of the terminal or server, it is to be understood that the processor may be Central Processing Unit (CPU), or other universal processors, Digital Signal Processor (DSP), Application Specific Integrated Circuit (ASIC), etc. The general processor can be a microprocessor or any conventional processor and the like. The steps of the method disclosed by the embodiment of the present invention can be directly executed by a hardware decoding processor or executed by the combination of hardware and software modules in the decoding processor.

It is also to be noted that the above embodiments are only used to illustrate the technical solutions of the present invention, but not to limit them; although the present invention has been described in detail with reference to the abovementioned embodiments, those of ordinary skill in the art should understand that the technical solutions described in the abovementioned embodiments can still be modified, or some or all of the technical characteristics thereof can be equivalently replaced; however, these modifications or substitutions do not make the essence of the corresponding technical solutions deviate from the scope of the technical solutions of the embodiments of the present invention.

## Claims

1. A method for recommending indexes by cloud computation, comprising the following steps:
Acquiring the unit computation cost and the unit storage cost of a currently used cloud computation server in unit time
Acquiring all historical query statements of a target user, extracting common characteristics of all the historical query statements, and determining query indexes corresponding to the historical query statements according to the common characteristics;
Determining the query cost of each query index according to the frequency and time of querying a database through the query index and the used computation resources;
Determining a plurality of current query indexes corresponding to the current query statement based on the acquired current query statement of the target user;
Determining the total cost corresponding to each current query index according to the plurality of current query indexes through the unit computation cost, the unit storage cost, and the computation resource usage amount and usage time; and
Recommending a target query index to the target user, wherein the target query index comprises the query index with the lowest cost in the total cost corresponding to each current query index.

2. The method for recommending the indexes by cloud computation according to claim 1, wherein the method of determining the query cost of each query index according to the frequency and time of querying a database through the query index and the used computation resources comprises:
According to the frequency of querying the database through the query index, the time of querying the database through the query index, the computation resources used by querying through the query index and the data sampling statistical information of pre-acquired source data
Determining the cost benefit of the query index based on the pre-acquired query index computation cost, and adding a cost benefit label for the query index

3. The method for recommending the index by cloud computation according to claim 1, wherein a method of determining the computation resource usage amount and usage time corresponding to each current query index comprises:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

4. The method for recommending the indexes by cloud computation according to claim 1, wherein after recommending a target query index to the target user, the method further comprises:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database

5. The method for recommending the indexes by cloud computation according to claim 1, wherein before acquiring all historical query statements of a target user, extracting common characteristics of all the historical query statements, and determining query indexes corresponding to the historical query statements according to the common characteristics, the method further comprises:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.

6. a system for recommending indexes by cloud computation, comprising:
A cloud computation and storage cost collection module used for acquiring the unit computation cost and the unit storage cost of the currently used cloud computation server in unit time;
A query history analysis and prediction module used for acquiring all historical query statements of the target user, extracting common characteristics of all the historical query statements, and determining query indexes corresponding to the historical query statements according to the common characteristics;
A construction and storage cost analysis and prediction module used for determining the query cost of each query index according to the frequency and time of querying a database through the query index and the used computation resources, and determining the plurality of current query indexes corresponding to the current query statement based on the acquired current query statement of the target user; and
Determining the total cost corresponding to each current query index according to the plurality of current query indexes through the unit computation cost, the unit storage cost, and the computation resource usage amount and usage time; and
An intelligent center judgment module used for recommending the target query index to the target user, wherein the target query index comprises the query index with the lowest cost in the total cost corresponding to each current query index.

7. The system for recommending the indexes by cloud computation according to claim 6, wherein the construction and storage cost analysis and prediction module is further used for:
Determining the query cost of each query index according to the frequency of querying the database through the query index, the time of querying the database through the query index, the computation resources used by querying through the query index and the data sampling statistical information of pre-acquired source data; and
Determining the cost benefit of the query index based on the pre-acquired query index computation cost, and adding a cost benefit label for the query index.

8. the system for recommending the indexes by cloud computation according to claim 6, wherein the construction and storage cost analysis and prediction module is further used for:
Determining the inclination rate and repetition rate of the query index in each dimension according to data sampling statistical information of pre-obtained source data;
Predicting computation resources, internal memory resources and construction duration required by each query index based on the inclination rate and repetition rate in each dimension; and
Determining the computation resource usage amount and usage time corresponding to each current query index based on the computation resources, the internal memory resources and the construction duration required by each query index, and the unit computation cost and the unit storage cost.

9. the system for recommending the indexes by cloud computation according to claim 6, wherein the system further comprises a cost computation module which is used for:
Constructing pre-computation indexes based on the target query index;
Pre-aggregating the pre-computation indexes based on the pre-computation index and a pre-constructed data set;
Analyzing the query efficiency of the query statement of the target user on the database and scanning data volume of the database based on the pre-aggregated pre-computation indexes; and
Determining the computation cost of the target query index based on the query efficiency and the scanned data volume of the database

10. the system for recommending the indexes by cloud computation according to claim 6, wherein the system further comprises a model matching module which is used for:
Constructing a query plan tree corresponding to all the historical query statements based on all the historical query statements, acquired in advance, of a plurality of users;
Extracting common characteristics of query statements of the query plan tree, and matching a query analysis model corresponding to the common characteristics based on the common characteristics; and
Determining query indexes corresponding to the historical query statements according to the query analysis model, wherein the query indexes include an inclusion relationship between the query statements and the query indexes.

11. a system for recommending indexes by cloud computation, comprising:
A first module used for automatically collecting the type of a computation host of a currently used cloud service provider, the use cost of a computation server in unit time and the storage cost of unit storage data volume in unit time;
A second module used for collecting all historical analysis query statements of a client and extracting common characteristics from all query plan trees so as to recommend a model for answering the historical analysis query statements;
A third module used for receiving constructed index candidates transmitted by an intelligent center judgment module and speculating the construction computation cost and storage cost required for constructing each index according to data sampling statistical information of source data;
A fourth module used for notifying and querying the conditions of all candidate indexes and query cost benefits provided by the second module and submitting the conditions to the third module to analyze all construction cost expenditure conditions;
A fifth module used for constructing a pre-computation index according to the index recommended by the fourth module, pulling an original super-large-scale data set for pre-aggregation and constructing the index; and

12. electronic equipment, comprising
Processor
A storage used for storing executable instructions of a processor, wherein
The processor is configured to call the instructions stored in the storage so as to execute the method according to any one of claims 1 to 5.

13. a computer readable storage medium, storing a computer program instruction which implements the method according to any one of claims 1 to 5 when being executed by the processor.
